# EUROPEAN PATENT SPECIFICATION

(11) **EP 4 326 996 B1**
(45) Date of publication and mention of the grant of the patent: **12.02.2025**
(21) Application number: 22722559.6
(22) Date of filing: 14.04.2022
(51) Int. Cl.: F16D 65/12

(54) **SHAPED MATERIAL AND MANUFACTURING METHOD THEREOF**
GEFORMTES MATERIAL UND DESSEN HERSTELLUNGSVERFAHREN
METÉRIAU FORMÉ ET PROCÉDÉ DE PRODUCTION

(30) Priority: 19.04.2021 IT 202100009803
(43) Date of publication of application: 28.02.2024
(73) Proprietor: Brembo S.p.A., 24035 Curno (Bergamo) (IT)
(72) Inventor: CIVIDINI, Omar, 24035 Curno, Bergamo (IT)
(74) Representative: Meroni, Francesca
(86) International application number: PCT/IB2022/053507
(87) International publication number: WO 2022/224095

(56) References cited:
- EP-A1- 3 308 053
- KR-A- 20050 020 986
- US-A- 5 546 880
- US-A1- 2001 001 189
- US-A1- 2017 234 387

## Description

### Field of the invention

The present invention relates to a shaped material and a method for manufacturing said shaped material. Preferably, said shaped material is a disc for disc brakes. More preferably, said shaped material is a ventilated disc for disc brakes.

### Background art

The use of discs for disc brakes made of carbon-based materials, so-called "Carbon-Carbon" or "C/C" is known. These are composite materials consisting of a carbon matrix in which carbon reinforcing fibers are arranged.

Conventionally, carbon fibers, or fibers made of a precursor of carbon, are aggregated (alone or with the use of binding agents, for example resins) to form a three-dimensional structure called "preform". The most used carbon precursors are PAN, pitch and rayon.

The carbon matrix is obtained during densification processes of the fibrous structure, which may be performed in various manners, for example by means of Chemical Vapor Deposition (CVD), Chemical Vapor Infiltration (CVI), Liquid Polymer Infiltration (LPI), Polymer Infiltration and Pyrolysis (PIP), or impregnation with resin and/or pitch.

The discs made of "C/C" material are therefore obtained by means of a method that involves overlapping layers of fabric and/or non-woven fabric to form the so-called carbonaceous "preform", possible addition of resins, possible heat treatments, and carbon densification processes. The latter lead to an increase in density such as to give the material adequate mechanical, thermal and tribological properties, for example a 2 to 6-fold increase in density.

To work as friction material, the "C/C" material needs high application temperatures which make discs made of "C/C" material particularly suitable for applications in disc brakes intended to be installed on high-performance vehicles, for example, high-end cars or racing motorcycles.

As it is known, discs for disc brakes comprise an annular portion, called braking band, intended to cooperate with brake pads of a caliper. In case of discs of the ventilated type, the braking band is made by means of two plates whose outer surfaces define opposite braking surfaces, while the inner surfaces delimit the portion of the disc comprising the ventilation holes for cooling the disc. Said braking band is intended to cooperate with disc brake calipers, which are adapted to apply a braking action on the vehicle by applying, by means of the aforesaid pads, friction on the opposite surfaces of the two plates, which are referred to as braking surfaces.

Due to the particular architecture which is created inside the stratified structure of the disc made of "C/C" material, some regions of the disc have proved to be critical to the structural level since they have a low resistance with respect to the applied load and a low flexural strength.

As a result, cracks or fractures may form in such regions, which are unacceptable for the highest-performance ranges of use and for the most extreme braking applications, such as in the case of sports cars, motorcycles and other means of transport traveling at high speeds.

In order to increase the flexural strength of the discs made of "C/C" material, EP 3 308 053 describes a disc comprising a plurality of layers of carbon fibers, each of which, in turn, comprises a plurality of radial segments and transverse segments placed side by side, in which the number of transverse segments is greater than the number of radial segments. More in particular, within the aforesaid layers of carbon fibers, five radial segments are alternated with at least six or seven transverse segments. Another example of carbon fiber discs for brakes is disclosed in US 2018/156289 A1, in which several segments with fibers oriented in radial and transverse direction are present.

Although the architecture presented by the disc of EP 3 308 053 has proved effective in reducing the occurrence of fractures, it is unable to ensure an optimal resistance of the disc.

For high-end road applications and the most extreme braking applications, the need is further particularly felt to reduce as much as possible the minimum thickness admissible for the disc plates, i.e., the admissible minimum thickness of the worn-out plates, i.e., consumed by the effect of the braking surfaces rubbing against the pad of a disc brake.

The disc architecture described in EP 3 308 053 requires a minimum thickness of the plates which - particularly in the highest-performance ranges of use - is desirable to reduce.

To date, it has not been possible yet to significantly increase the flexural strength of the discs made of "C/C" material and, at the same time, the drag resistance thereof.

Therefore, the problem underlying the present invention is to provide a shaped material, preferably a disc for disc brakes, which overcomes the drawbacks of the prior art, and a process for obtaining it which is convenient to implement. More specifically, the present invention aims at providing a shaped material capable of drastically reducing the possibility of cracks and fractures in a disc brake, while ensuring at the same time a high resistance of the disc and further reducing the minimum thickness admissible for the plates.

### Summary of the invention

The problem set forth above is solved by means of a shaped material and a method for manufacturing said shaped material as outlined in the accompanying claims, the definitions of which form an integral part of the present description.

A first object of the invention is a shaped material having a circular or annular shape, for example, a disc for disc brakes, for example of ventilated type, comprising:
a plurality of layers of carbon fibers stacked along an overlap axis Z,
wherein each layer comprises a plurality of radial segments and transverse segments placed side by side and joined together to form said layer,
wherein the radial segments are segments in which the carbon fibers are mainly oriented in a radial direction R relative to the overlap axis Z or oriented approximately parallel to the radial direction R, and the transverse segments are segments in which the carbon fibers are mainly oriented in a direction I incident to said radial direction R,
wherein said shaped material is characterized in that each radial segment is adjacent and joined, on both sides, to a transverse segment and each transverse segment is adjacent and joined, on both sides, to a radial segment, thus forming in each layer an alternation of radial segments and transverse segments.

A second object of the present invention is a method for manufacturing the shaped material as defined above, which comprises the following steps:
a) stacking a plurality of layers of carbon fibers, or of precursors of said carbon fibers, along an overlap axis Z to form a multilayer body, each of said layers being formed by a plurality of radial segments and transverse segments, wherein each radial segment is adjacent and joined, on both sides, to a transverse segment and each transverse segment is adjacent and joined, on both sides, to a radial segment, forming in each layer an alternation of radial segments and transverse segments;
b) subjecting the multilayer body obtained in step a) to a thermal or thermochemical densification treatment, so as to obtain said shaped material;
c) optionally, infiltrating the shaped material obtained in step b) with an infiltrating agent, for example silicon (Si) or silicon carbide (SiC).

The specific architecture of the layers of which the shaped material of the present invention is made, i.e., the alternation of a radial segment and a transverse segment in each layer, gives the shaped material of the invention an increased flexural strength, as well as an increased drag resistance, compared to existing shaped materials made of "C/C" material which have different architectures of the layers.

Furthermore, it has been surprisingly found that, where the shaped material is a ventilated type disc for disc brakes, the flexural strength of the disc plates is ensured with a number of layers in the plate which is lower than the known ventilated discs. This advantageously translates into a minimum thickness admissible for the worn-out plates which is less than that of the known ventilated discs. In particular, it has been surprisingly found that the flexural strength of the ventilated disc is ensured with only three layers in the plate.

The aforesaid advantages exhibited by the shaped material object of the present invention are obtained at the same manufacturing costs of the existing shaped materials.

Further features and advantages of the invention will be apparent from the description of some illustrative embodiments, given here by way of non-limiting example.

### Brief description of the figures

Figure 1 shows a perspective view of a fabrication step of the shaped material according to an embodiment of the invention.
Figures 2 and 3 diagrammatically show a radial segment and a transverse segment, respectively, usable in the shaped material of the present invention.
Figure 4 diagrammatically shows a side view of a disc for disc brakes of the ventilated type according to an embodiment of the invention.
Figure 5 diagrammatically shows the development over 360° of the architecture, so-called "1-1", of a shaped material according to an embodiment of the invention.
Figure 6 diagrammatically shows the development over 360° of the architecture, so-called "7-5", of a known shaped material, in which each layer has an alternation of seven transverse segments and five radial segments.
Figure 7 represents a chart showing the percentage of damaged volume vs. the torque (Nm) of a disc according to the present invention ("Disc 1-1") and of a disc according to the prior art ("Disc 7-5").

### Detailed description of the invention

It is an object of the present invention a shaped material having a circular or annular shape comprising a plurality of layers of carbon fibers stacked along an overlap axis Z, also called construction axis Z, in which each layer is formed by a plurality of radial segments and transverse segments, and in which each radial segment is adjacent and joined, on both sides, to a transverse segment and each transverse segment is, in turn, adjacent and joined, on both sides, to a radial segment, forming in each layer an alternation of radial segments and transverse segments.

Preferably, the shaped material according to the present invention relates to a disc for disc brakes, advantageously a disc of the ventilated type.

It has been surprisingly found that such an architecture, called "1-1", in which a radial segment alternates with a transverse segment to form each layer of the shaped material, increases both the drag resistance - given specifically by the radial segments - and the flexural strength - given specifically by the transverse segments. In particular, it has been surprisingly found that in the aforesaid "1-1" architecture the fibers of the transverse segments are effectively parallel to the flexural load, therefore more efficient. Consequently, the occurrence of cracks or fractures inside the shaped material is drastically reduced, making the shaped material particularly suitable for uses in which, among other features, a high flexural strength is also desired, for example as a disc in braking systems of sports and high-performance cars.

Furthermore, it has been surprisingly found that in discs for disc brakes of the ventilated type according to the present invention, the flexural strength is ensured by a smaller number of layers in the disc plate.

A first advantage linked to such feature concerns the possibility of increasing the thickness that can be worn out of the disc and consequently increasing the useful life of the disc itself, keeping unchanged the thickness of the plate at the beginning of the life cycle.

A further advantage linked to such feature concerns the possibility of reducing the thickness of the plate at the beginning of the life cycle of the disc, keeping unchanged the thickness that can be worn out, and therefore of increasing the number of ventilation holes and the thermal exchange of the disc by virtue of the greater space available for ventilation. Also by virtue of a better heat dissipation, the disc according to the present invention is suited for use in braking systems of sports and high-performance cars.

With reference to the figures, the shaped material of the present invention is indicated, as a whole, with reference numeral 1.

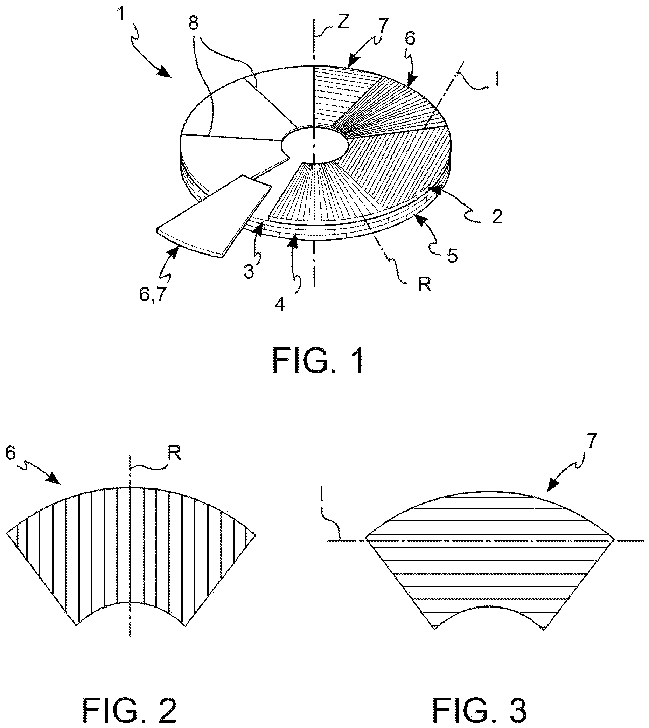

The shaped material 1 comprises a plurality of layers 2, 3, 4, 5 of carbon fibers, such layers being stacked along an overlap axis Z, also called construction axis Z, for example shown vertically in Figure 1. For simplicity of representation, Figure 1 shows four layers 2, 3, 4, 5, but such number of layers is merely given by way of example and is not to be understood as limiting for the purposes of the present invention.

In the present description, unless otherwise specified, the terms "radial", "axial", "angularly", "circumferential" will always be understood with respect to the overlap axis Z.

According to an embodiment variant, said overlap axis Z is oriented parallel to a rotation axis of the shaped material 1 or of the disc for disc brakes, during the use thereof.

Each layer 2, 3, 4, 5 comprises a plurality of segments 6, 7 placed side by side and joined together to form said layer, the segments of each layer 2, 3, 4, 5 comprising radial segments 6 and transverse segments 7.

The radial segments 6 are segments in which the carbon fibers are mainly oriented in a radial direction R relative to the overlap axis Z, or oriented approximately parallel to the radial direction R. The transverse segments 7 are segments in which the carbon fibers are mainly oriented in a direction I incident to the radial direction R. In this regard, the diagrams of Figure 2 and Figure 3 show, respectively, the orientations of the carbon fibers in a radial direction and in a transverse direction on respective segments 6 and 7.

In a preferred embodiment, the incident direction I is substantially orthogonal with respect to the radial direction R.

Advantageously, at least one part of said segments 6, 7 is in the form of a circular sector or of a circular crown arch, as shown, for example, in Figure 1.

Preferably, the circumferential width of said circular sectors or circular crown arches is comprised in the range 60-90°, preferably 60-80°, preferably 65-72°, for example about 68°.

In an embodiment of the invention, all segments 6, 7 substantially have the same form. Preferably, all segments 6, 7 have the same circumferential width.

In a preferred embodiment, each segment mainly or exclusively comprises unidirectional carbon fibers, arranged in the radial direction R or in the incident direction I depending on whether it is a radial segment 6 or a transverse segment 7.

In a preferred embodiment, relative to the overlap axis Z, the segments of a layer 2 are angularly offset with respect to the segments of an adjoining layer 3 so that the joining zones 8 between the segments do not overlap through the thickness S of the shaped material 1.

In an embodiment of the invention, relative to the overlap axis Z, each radial segment 6 of a layer 2 overlaps partly with a radial segment 6 and partly with a transverse segment 7 of an adjoining layer 3. According to this embodiment, each radial segment 6 of a layer 2 overlaps with a radial segment 6 of an adjoining layer 3 for a portion equal to 5%-50%, preferably equal to 10%-40% or 15%-35%, of the circumferential width thereof, and with a transverse segment 7 of the adjoining layer 3 for a portion equal to 50%-95%, preferably equal to 60%-90% or 65%-85%.

Similarly, in an embodiment of the invention, relative to the overlap axis Z, each transverse segment 7 of a layer 2 overlaps partly with a transverse segment 7 and partly with a radial segment 6 of an adjoining layer 3. In accordance with this embodiment, each transverse segment 7 of a layer 2 overlaps with a transverse segment 7 of an adjoining layer 3 for a portion equal to 5%-50%, preferably equal to 10%-40% or 15%-35%, of the circumferential width thereof, and with a radial segment 6 of the adjoining layer 3 for a portion equal to 50%-95%, preferably equal to 60%-90% or 65%-85%.

In an embodiment (not shown), at least one segment of a layer 2 may be partially overlapped with at least one other segment that is alongside it in a circumferential direction.

Advantageously, in each layer 2, 3, 4, 5, the number of radial segments 6 is equal to the number of transverse segments 7.

In an embodiment of the invention, the segments 6, 7 extend in a spiral around the construction axis Z in a substantially continuous manner through the plurality of layers 2, 3, 4, 5 of carbon fibers. In this case, the layers 2, 3, 4, 5 are represented by coils. In accordance with this embodiment, preferably, each coil has an inclination comprised in the range between 1° and 10°, preferably between 1° and 5°, for example of about 1°, relative to an axis orthogonal to the construction axis Z.

In the present description, reference is made indiscriminately to layers and coils. Therefore, when the segments 6, 7 extend in a spiral, it is understood that the layers 2, 3, 4, 5 are coils.

In a preferred embodiment, the number of layers 2, 3, 4, 5 of carbon fibers or coils is comprised in the range between 10 and 50, preferably between 18 and 40, for example between 20 and 35 or between 24 and 30. In a specific embodiment, the number of layers or coils is comprised between 21 and 26.

Merely by way of example, each of said layers 2, 3, 4, 5 of carbon fibers may have a thickness comprised between 0.5 mm and 3 mm, for example of about 1.25 mm or 1.5 mm.

Merely by way of example, along the overlap axis Z the shaped material 1 may have a thickness S equal to or greater than about 5 millimeters, for example equal to or greater than about 25 millimeters, for example comprised between about 25 millimeters and about 300 millimeters, for example 28 millimeters, 32 millimeters, 38 millimeters or 40 millimeters.

In an embodiment of the invention, at least one part of said carbon fibers, preferably all carbon fibers, are derived from oxidized polyacrylonitrile fibers. For example, said fibers are produced by the company SGL Carbon SE under the trade name Panox^{®}.

In a preferred embodiment, the shaped material 1 comprises a carbonaceous matrix within which at least one part of said carbon fibers is incorporated. The expression "carbonaceous matrix" denotes a matrix composed by at least 50% of carbon.

In an embodiment of the invention, the shaped material 1 comprises silicon carbide (SiC) obtained by reaction of part of the carbon (C) of the carbon fibers and/or of the carbonaceous matrix of said shaped material 1 with at least part of silicon (Si) infiltrated in the shaped material 1. Preferably, said silicon carbide (SiC) is arranged as a bridge between layers 2, 3, 4, 5 of adjacent carbon fibers.

Preferably, the shaped material 1 has a residual porosity of less than 5%, for example equal to or less than 3%. Preferably, the value of such residual porosity is considered for a shaped material 1 comprising silicon carbide (SiC) zones, specifically at the end of at least one step of infiltration with silicon (Si).

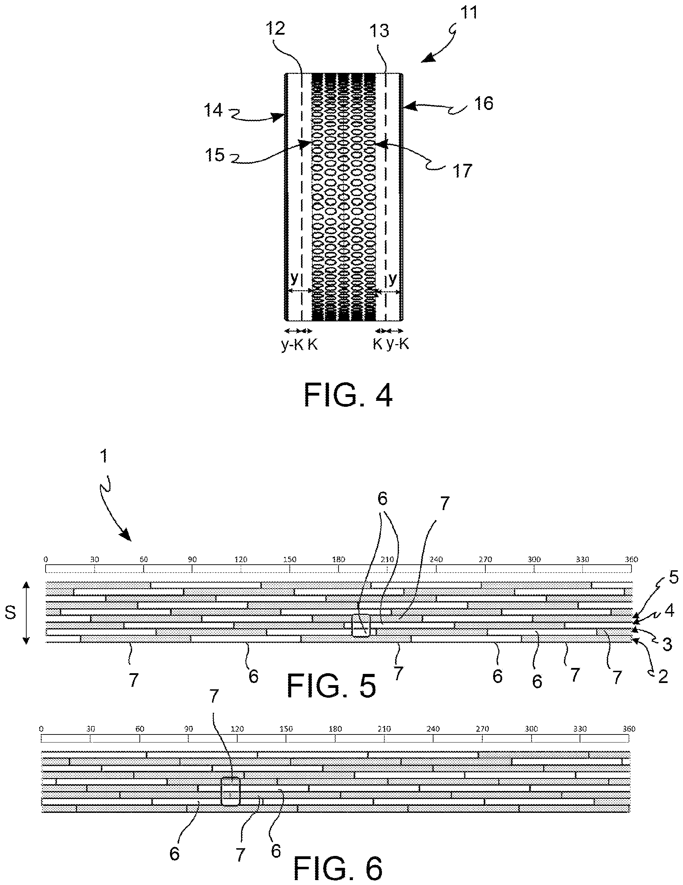

In a preferred embodiment of the invention, said shaped material 1 is a disc for disc brakes of the ventilated type, illustrated merely by way of example in Figure 4.

The ventilated disc in Figure 4 is indicated, as a whole, with the reference numeral 11. Said ventilated disc comprises a first plate 12 and a second plate 13, which together constitute the so-called braking band. Said first plate 12 is delimited by an outer surface 14 and an inner surface 15 and has a thickness y which extends between said two surfaces 14, 15. Similarly, said second plate 13 is delimited by an outer surface 16 and an inner surface 17 and has a thickness y which extends between said two surfaces 16, 17.

Said outer surfaces 14, 16 define opposite braking surfaces intended to cooperate with the pad of a disc brake. Said braking surfaces 14, 16 are subject to wear.

The thickness y of each plate 12, 13 is given by the sum of two dimensions represented by the "minimum thickness K" admissible for a plate and by the "thickness that can be worn out (y-K)". The expression "minimum thickness K" denotes the minimum thickness admissible for a worn-out plate, i.e., consumed by the effect of the braking surface rubbing against the pad of a disc brake, without the disc showing structural failures. In other words, the "minimum thickness K" is the thickness of the worn-out plate at the end of the life cycle of the disc. The "thickness that can be worn out (y-K)" is the thickness that is worn out, i.e., consumed, over time. The latter takes on a variable value. It is desirable that the "minimum thickness K" be as small as possible, so as to ensure a longer useful life of the ventilated disc.

Advantageously, the "minimum thickness K" of the plates 12, 13 of a disc 11 according to the present invention is formed by three of the aforesaid layers stacked along the overlap axis Z. In fact, it has been surprisingly found that the flexural strength of the plates 12, 13 is ensured by the overlap of only three layers. In this regard, reference is made to Figure 5, which shows how the overlap of three layers allows to have, in each point along an axis orthogonal to the overlap axis Z, at least one transverse segment capable of giving the disc the desired flexural strength.

On the contrary, in known discs, the flexural strength of the plates is ensured with a greater number of layers. For example, in discs which have a "7-5" architecture, given by the alternation of seven transverse segments 6 and five radial segments 5 in each layer and shown in Figure 6, the flexural strength of the plates is ensured by the overlap of four layers. Therefore the "minimum thickness K" admissible for a plate of a disc with a "7-5" architecture is necessarily greater.

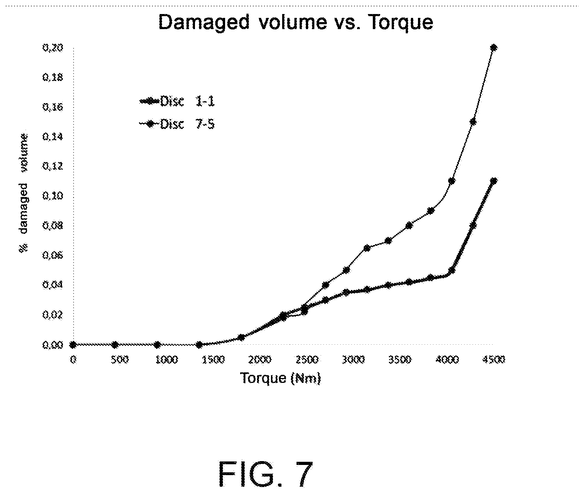

As it is clear from the chart of Figure 7, a disc having a "1-1" architecture (Disc 1-1), in accordance with the present invention, is further provided with a greater mechanical strength with respect to a disc of the same geometry having a "7- 5" architecture (Disc 7-5). In fact, as the applied braking torque increases, the damaged volume of the Disc 1-1 is less than the damaged volume of the Disc 7-5.

The shaped material according to the present invention is obtained with a method according to the claims.

Even where it is not expressly indicated, preferred or accessory variants of such method may comprise any feature which may be deduced even only implicitly, from a structural point of view, from the above description.

Said method comprises the following steps:
a) stacking a plurality of layers 2, 3, 4, 5 of carbon fibers, or of precursors of said carbon fibers, along an overlap axis Z to form a multilayer body, each of said layers being formed by a plurality of radial segments 6 and transverse segments 7, in which each radial segment 6 is adjacent and joined, on both sides, to a transverse segment 7 and each transverse segment 7 is, in turn, adjacent and joined, on both sides, to a radial segment 6, forming in each layer an alternation of radial segments 6 and transverse segments 7;
b) subjecting the multilayer body obtained in step a) to a thermal or thermochemical densification treatment, so as to obtain the shaped material 1, 11;
c) optionally, infiltrating the shaped material 1, 11 obtained in step b) with an infiltrating agent, for example silicon (Si) or silicon carbide (SiC).

In an embodiment of the invention, said step a) also comprises a step of needling said stacked layers 2, 3, 4, 5.

In an embodiment, step a) comprises a step of arranging the segments 6, 7 in a spiral around the construction axis Z in a substantially continuous manner through the plurality of layers 2, 3, 4, 5 of carbon fibers.

In one embodiment, said infiltrating agent comprises silicon (Si). In accordance with this embodiment, during said step c), part of the infiltrated silicon (Si) reacts with part of the carbon (C) of the carbon fibers and/or of the carbonaceous matrix of the shaped material 1, 11 to form silicon carbide (SiC).

In a preferred embodiment, the needling step in step a) may comprise one or more steps of transposing, for example by means of shaped needles, the carbon fibers or the precursors of such carbon fibers through the thickness S of the different layers 2, 3, 4, 5 of the shaped material, forming an entangled three-dimensional structure.

It should be noted that, in step a), the layers 2, 3, 4, 5 may comprise both carbon fibers (i.e., fibers already carbonized) or precursors of such fibers (for example, oxidized polyacrylonitrile fibers) which are transformed into carbon fibers during an optional carbonization step downstream of step a).

In accordance with different embodiments, during step b), the densification treatment is carried out with different types of methods.

A first method is Chemical Vapor Deposition (CVD) or Chemical Vapor Infiltration (CVI), depending on whether there is only a coating or an infiltration of carbon in vapor form. Typically, if the material is fibrous and thus has a high porosity, it is Chemical Vapor Infiltration (CVI). These methods involve the use of hydrocarbon mixtures (for example, methane and propane) and the exposure of the material to be treated to such mixtures at high temperatures and low pressures. Operating temperatures are in the range of 900-1200°C, preferably 1000-1100°C, and pressures below 300 mbar are used, preferably of a few tens of mbar. The hydrocarbon mixtures decompose to form elemental carbon, which is then deposited or infiltrated into the matrix of the material being treated. This method, which requires the use of dedicated furnaces, involves the deposition of a thin layer (typically a few microns) on the fibers; therefore, several cycles of infiltration and overall coatings on the fibers higher than ten microns (typically 10-20 microns) are required in order to obtain the desired densification.

A different method, known as Liquid Polymer Infiltration (LPI) or Polymer Infiltration and Pyrolysis (PIP) involves the infiltration of the matrix of the material to be treated with a liquid polymer and the subsequent high-temperature heat treatment (pyrolysis) which causes the carbonization of the polymer deposited on the carbon fibers. Such method is performed by immersing one or more preforms in a liquid polymer bath inside an autoclave. Preferably, the infiltration step is carried out at a pressure comprised between 50 and 500 mbar and at a temperature comprised between 20 and 50°C, preferably at room temperature. The preform is left immersed for a time preferably comprised between 10 and 120 minutes, for example between 15 and 45 minutes. Following the infiltration, the polymer is cured at a temperature which is a function of the material used. Lastly, the material is pyrolyzed in an inert environment at a temperature preferably comprised between 700 and 1000°C, for example comprised between 850°C and 950°C, to convert the polymeric matrix into carbon. Also in this case, several steps of infiltration and pyrolysis are required before appropriate densification of the preform is achieved. The entire process is typically repeated a minimum of three times until the desired density is reached.

In accordance with a preferred embodiment of the invention, during step c), silicon is infiltrated into the shaped material by means of a liquid silicon infiltration (LSI) process, during which the silicon is brought to a temperature higher than the melting temperature thereof so as to melt and infiltrate by capillarity into said shaped material. Said process is carried out in a suitable treatment chamber.

In accordance with this embodiment, the shaped material is placed on a layer or bed of silicon, preferably powdered, for example, by means of porous septa, such as felts, elements of pyrolyzed wood or pegs.

Said treatment chamber is introduced into a suitable furnace of the conventional type, which is heated to a temperature preferably above 1410°C, more preferably comprised between 1420°C and 1700°C, for example, at about 1500°C. At these temperatures the silicon melts, rises by capillarity inside the pores of the shaped material and at least partially reacts with part of the carbon of the carbon fibers and/or of the carbonaceous matrix to form silicon carbide (SiC).

Both the heating to the treatment temperature and the subsequent cooling are conducted gradually. For example, it can take up to 8 or more hours to reach a temperature of treatment of about 1500°C and a similar amount of time to cool the infiltrated pad.

Preferably, said silicon infiltration process is conducted at a reduced pressure comprised between 20 mbar and 150 mbar, more preferably between 80 mbar and 120 mbar.

Advantageously, the process and the shaped material of the present invention may be implemented with great simplicity in any existing production line, above all by virtue of the relative constructive simplicity.

Advantageously, the process and the shaped material of the present invention allow to achieve considerable manufacturing savings, by virtue of the fact that specific processes do not require supplementary or additional machinery with respect to those usually provided.

To the embodiments of the aforementioned method and shaped material, in order to satisfy specific needs, a person skilled in the art could make variations or replacements of elements with other equivalent operations. Such variants are also included in the scope of protection as defined by the following claims. Furthermore, each variant described as belonging to a possible embodiment may be implemented independently from the other described variants.

## Claims

1. Shaped material (1, 11) having circular or annular shape and comprising a plurality of layers (2, 3, 4, 5) of carbon fibers stacked along an overlap axis (Z),
wherein each layer (2, 3, 4, 5) comprises a plurality of radial segments (6) and transverse segments (7) placed side by side and joined together to form said layer,
wherein the radial segments (6) are segments in which the carbon fibers are mainly oriented in a radial direction (R) relative to the overlap axis (Z), and the transverse segments (7) are segments in which the carbon fibers are mainly oriented in a direction (I) incident to said radial direction,
wherein said shaped material (1, 11) is **characterized in that** each radial segment (6) is adjacent and joined, on both sides, to a transverse segment (7) and each transverse segment (7) is adjacent and joined, on both sides, to a radial segment (6), thus forming in each layer (2, 3, 4, 5) an alternation of radial segments (6) and transverse segments (7).

2. Shaped material (1, 11) according to claim 1, wherein, relative to the overlap axis (Z), the segments (6, 7) of a layer are angularly offset with respect to the segments (6, 7) of an adjoining layer so that the joining zones (8) between the segments do not overlap through the thickness (S) of said shaped material (1, 11).

3. Shaped material (1, 11) according to claim 1 or 2, wherein the segments (6, 7) extend in a spiral around the overlap axis (Z) in a substantially continuous manner through the plurality of layers (2, 3, 4, 5) of carbon fibers.

4. Shaped material (1, 11) according to claim 3, wherein each layer (or coil) has an inclination comprised in the range between 1° and 10°, preferably between 1° and 5°, for example of about 1°, relative to an axis orthogonal to the overlap axis (Z).

5. Shaped material (1, 11) according to any one of the preceding claims, wherein the number of layers (2, 3, 4, 5) is comprised in the range between 18 and 40, preferably between 20 and 35 or between 24 and 30 or between 21 and 26.

6. Shaped material (1, 11) according to any one of the preceding claims, wherein the incident direction (I) is substantially orthogonal to the radial direction (R).

7. Shaped material (1, 11) according to any one of the preceding claims, wherein the segments (6, 7) are in the form of a circular sector or of a circular crown arch having a circumferential width comprised in the range 60-90°, for example of about 68°.

8. Shaped material (1, 11) according to any one of the preceding claims, wherein each segment (6, 7) mainly or exclusively comprises unidirectional carbon fibers, arranged in the radial direction (R) or in the incident direction (I).

9. Shaped material (1, 11) according to any one of the preceding claims, wherein at least part of the carbon fibers, preferably all the carbon fibers, are derived from oxidized polyacrylonitrile fibers, for example Panox^{®} fibers.

10. Shaped material (1, 11) according to any one of the preceding claims, wherein the overlap axis (Z) is oriented parallel to a rotation axis of the shaped material (1, 11).

11. Shaped material (1, 11) according to any one of the preceding claims, comprising silicon carbide (SiC) obtained by reaction of part of the carbon (C) of said carbon fibers and/or of a carbonaceous matrix of said shaped material (1, 11) with at least part of silicon (Si) infiltrated in said shaped material (1, 11), preferably the silicon carbide (SiC) being arranged to bridge adjacent layers of carbon fibers.

12. Shaped material (1, 11) according to any one of the preceding claims, wherein said shaped material (1, 11) has a residual porosity of less than 5%, for example equal to or less than 3%.

13. Shaped material (1, 11) according to any one of the preceding claims, the shaped material being a disc for disc brakes, for example a ventilated disc.

14. Shaped material (1, 11) according to claim 13, wherein said disc for disc brakes is ventilated and comprises a braking band comprising two plates (12, 13) whose outer surfaces (14, 16) define opposite braking surfaces intended to cooperate with the pad of a disc brake, wherein each of said plates (12, 13) has a thickness (y) defined as the sum of "minimum thickness" (K) and "thickness that can be worn out" (y-K), said "minimum thickness" (K) being equal to the thickness of three layers (2, 3, 4) and said "thickness that can be worn out" (y-K) being variable.

15. Method for manufacturing the shaped material (1, 11) according to any one of the preceding claims, comprising the following steps:
a) stacking a plurality of layers (2, 3, 4, 5) of carbon fibers, or of precursors of said carbon fibers, along an overlap axis (Z) to form a multilayer body, each of said layers (2, 3, 4, 5) being formed by a plurality of radial segments (6) and transverse segments (7), wherein each radial segment (6) is adjacent and joined, on both sides, to a transverse segment (7) and each transverse segment (7) is adjacent and joined, on both sides, to a radial segment (6), forming in each layer (2, 3, 4, 5) an alternation of radial segments (6) and transverse segments (7) ;
b) subjecting the multilayer body obtained in step a) to a thermal or thermochemical densification treatment, so as to obtain said shaped material (1, 11);
c) optionally, infiltrating the shaped material (1, 11) obtained in step b) with an infiltrating agent, for example silicon (Si) or silicon carbide (SiC).

16. Method according to claim 15, wherein said step a) comprises a step of arranging the radial segments (6) and the transverse segments (7) in a spiral around the overlap axis (Z) in a substantially continuous manner through the plurality of layers (2, 3, 4, 5) of carbon fibers.

17. Method according to claim 15 or 16, wherein said infiltrating agent comprises silicon (Si) and, during said step c), part of the infiltrated silicon (Si) reacts with part of the carbon (C) of the carbon fibers and/or of a carbonaceous matrix of said shaped material (1, 11) to form silicon carbide (SiC).

## Patentansprüche

1. Geformtes Material (1, 11), welches eine kreisförmige oder ringförmige Form aufweist und eine Mehrzahl von Schichten (2, 3, 4, 5) von Kohlenstofffasern umfasst, welche entlang einer Überlappungsachse (Z) gestapelt sind,
wobei jede Schicht (2, 3, 4, 5) eine Mehrzahl radialer Segmente (6) und transversaler Segmente (7) umfasst, welche Seite-an-Seite platziert sind und miteinander verbunden sind, um die Schicht zu bilden,
wobei die radialen Segmente (6) Segmente sind, bei welchen die Kohlenstofffasern hauptsächlich in einer radialen Richtung (R) relativ zu der Überlappungsachse (Z) ausgerichtet sind, und die transversalen Segmente (7) Segmente sind, bei welchen die Kohlenstofffasern hauptsächlich in einer Richtung (I) orientiert sind, welche bezüglich der radialen Richtung einfallend ist,
wobei das geformte Material (1, 11) **dadurch gekennzeichnet ist, dass** jedes radiale Segment (6), an beiden Seiten, einem transversalen Segment (7) benachbart und mit diesem verbunden ist, und jedes transversale Segment (7), an beiden Seiten, einem radialen Segment (6) benachbart und mit diesem verbunden ist, wodurch in jeder Schicht (2, 3, 4, 5) eine Alternation radialer Segmente (6) und transversaler Segmente (7) gebildet ist.

2. Geformtes Material (1, 11) nach Anspruch 1,
wobei, relativ zu der Überlappungsachse (Z), die Segmente (6, 7) einer Schicht mit Bezug auf die Segmente (6, 7) einer angrenzenden Schicht winkelmäßig versetzt sind, so dass die Verbindungszonen (8) zwischen den Segmenten durch die Dicke (S) des geformten Materials (1, 11) hindurch nicht überlappen.

3. Geformtes Material (1, 11) nach Anspruch 1 oder 2,
wobei sich die Segmente (6, 7) in einer Spirale um die Überlappungsachse (Z) in einer im Wesentlichen kontinuierlichen Weise durch die Mehrzahl von Schichten (2, 3, 4, 5) von Kohlenstofffasern erstrecken.

4. Geformtes Material (1, 11) nach Anspruch 3,
wobei jede Schicht (oder Windung) eine Neigung aufweist, welche in dem Bereich zwischen 1° und 10°, vorzugsweise zwischen 1° und 5°, umfasst ist, beispielsweise von etwa 1°ist, relativ zu einer Achse orthogonal zu der Überlappungsachse (Z).

5. Geformtes Material (1, 11) nach einem der vorhergehenden Ansprüche, wobei die Anzahl von Schichten (2, 3, 4, 5) in dem Bereich von zwischen 18 und 40, vorzugsweise von zwischen 20 und 35 oder von zwischen 24 und 30 oder von zwischen 21 und 26, umfasst ist.

6. Geformtes Material (1, 11) nach einem der vorhergehenden Ansprüche, wobei die Einfallrichtung (I) im Wesentlichen orthogonal zu der radialen Richtung (R) ist.

7. Geformtes Material (1, 11) nach einem der vorhergehenden Ansprüche, wobei die Segmente (6, 7) in der Form eines kreisförmigen Sektors oder eines kreisförmigen Kronenbogens sind, aufweisend eine Umfangsbreite, welche in dem Bereich von 60-90° umfasst ist, beispielsweise etwa 68° beträgt.

8. Geformtes Material (1, 11) nach einem der vorhergehenden Ansprüche, wobei jedes Segment (6, 7) hauptsächlich oder ausschließlich unidirektionale Kohlenstofffasern umfasst, welche in der radialen Richtung (R) oder in der Einfallrichtung (I) angeordnet sind.

9. Geformtes Material (1, 11) nach einem der vorhergehenden Ansprüche, wobei wenigstens ein Teil der Kohlenstofffasern, vorzugsweise alle der Kohlenstofffasern, von oxidierten Polyacrylnitril-Fasern, beispielsweise Panox^{®}-Fasern, abgeleitet sind.

10. Geformtes Material (1, 11) nach einem der vorhergehenden Ansprüche, wobei die Überlappungsachse (Z) parallel zu einer Rotationsachse des geformten Materials (1, 11) ausgerichtet ist.

11. Geformtes Material (1, 11) nach einem der vorhergehenden Ansprüche, umfassend Siliziumcarbid (SiC), welches durch eine Reaktion eines Teils des Kohlenstoffs (C) der Kohlenstofffasern und/oder einer kohlenstoffhaltigen Matrix des geformten Materials (1, 11) mit wenigstens einem Teil von Silizium (Si) erhalten ist, welches in dem geformten Material (1, 11) infiltriert ist, wobei vorzugsweise das Siliziumcarbid (SiC) angeordnet ist, um benachbarte Schichten von Kohlenstofffasern zu überbrücken.

12. Geformtes Material (1, 11) nach einem der vorhergehenden Ansprüche, wobei das geformte Material (1, 11) eine Restporosität von weniger als 5%, beispielsweise von gleich wie oder weniger als 3%, aufweist.

13. Geformtes Material (1, 11) nach einem der vorhergehenden Ansprüche, wobei das geformte Material eine Scheibe für Scheibenbremsen, beispielsweise eine belüftete Scheibe, ist.

14. Geformtes Material (1, 11) nach Anspruch 13,
wobei die Scheibe für Scheibenbremsen belüftet ist und ein Bremsband umfasst, welches zwei Platten (12, 13) umfasst, deren äußere Flächen (14, 16) entgegengesetzte Bremsflächen definieren, welche dazu bestimmt sind, mit dem Belag einer Scheibenbremse zusammenzuwirken, wobei jede der Platten (12, 13) eine Dicke (y) aufweist, welche als die Summe einer "minimalen Dicke" (K) und einer "Dicke, welche verschlissen werden kann" (y-K) definiert ist, wobei die "minimale Dicke" (K) gleich der Dicke von drei Schichten (2, 3, 4) ist und die "Dicke, welche verschlissen werden kann" (y-K) variabel ist.

15. Verfahren zur Herstellung des geformten Materials (1, 11) nach einem der vorhergehenden Ansprüche, umfassend die folgenden Schritte:
a) Stapeln einer Mehrzahl von Schichten (2, 3, 4, 5) von Kohlenstofffasern, oder von Vorläufern der Kohlenstofffasern, entlang einer Überlappungsachse (Z), um einen mehrschichtigen Körper zu bilden, wobei jede der Schichten (2, 3, 4, 5) durch eine Mehrzahl radialer Segmente (6) und transversaler Segmente (7) gebildet wird, wobei jedes radiale Segment (6), an beiden Seiten, einem transversalen Segment (7) benachbart und mit diesem verbunden ist, und jedes transversale Segment (7), an beiden Seiten, einem radialen Segment (6) benachbart und mit diesem verbunden ist, wodurch in jeder Schicht (2, 3, 4, 5) eine Alternation radialer Segmente (6) und transversaler Segmente (7) gebildet wird;
b) Aussetzen des mehrschichtigen Körpers, welcher in Schritt a) erhalten worden ist, einer thermischen oder thermochemischen Verdichtungsbehandlung, um das geformte Material (1, 11) zu erhalten;
c) optional, Infiltrieren des geformten Materials (1, 11), welches in Schritt b) erhalten worden ist, mit einem Infiltrierungsmittel, beispielsweise Silizium (Si) oder Siliziumcarbid (SiC).

16. Verfahren nach Anspruch 15, wobei der Schritt a) einen Schritt eines Anordnens der radialen Segmente (6) und der transversalen Segmente (7) in einer Spirale um die Überlappungsachse (Z) in einer im Wesentlichen kontinuierlichen Weise durch die Mehrzahl von Schichten (2, 3, 4, 5) von Kohlenstofffasern umfasst.

17. Verfahren nach Anspruch 15 oder 16, wobei das Infiltrierungsmittel Silizium (Si) umfasst und, während des Schritts c), ein Teil des infiltrierten Siliziums (Si) mit einem Teil des Kohlenstoffs (C) der Kohlenstofffasern und/oder einer kohlenstoffhaltigen Matrix des geformten Materials (1, 11) reagiert, um Siliziumcarbid (SiC) zu bilden.

## Revendications

1. Matériau façonné (1, 11) présentant une forme circulaire ou annulaire et comprenant une pluralité de couches (2, 3, 4, 5) de fibres de carbone empilées le long d'un axe de chevauchement (Z),
dans lequel chaque couche (2, 3, 4, 5) comprend une pluralité de segments radiaux (6) et de segments transversaux (7) placés côte à côte et reliés ensemble pour former ladite couche,
dans lequel les segments radiaux (6) sont des segments dans lesquels les fibres de carbone sont principalement orientées dans une direction radiale (R) par rapport à l'axe de chevauchement (Z), et les segments transversaux (7) sont des segments dans lesquels les fibres de carbone sont principalement orientées dans une direction (I) incidente par rapport à ladite direction radiale,
dans lequel ledit matériau façonné (1, 11) est **caractérisé en ce que** chaque segment radial (6) est adjacent et relié, sur les deux côtés, à un segment transversal (7), et chaque segment transversal (7) est adjacent et relié, sur les deux côtés, à un segment radial (6), formant ainsi dans chaque couche (2, 3, 4, 5) une alternance de segments radiaux (6) et de segments transversaux (7).

2. Matériau façonné (1, 11) selon la revendication 1, dans lequel, par rapport à l'axe de chevauchement (Z), les segments (6, 7) d'une couche sont décalés angulairement par rapport aux segments (6, 7) d'une couche attenante, de sorte que les zones de liaison (8) entre les segments ne se chevauchent pas à travers l'épaisseur (S) dudit matériau façonné (1, 11).

3. Matériau façonné (1, 11) selon la revendication 1 ou 2, dans lequel les segments (6, 7) s'étendent en spirale autour de l'axe de chevauchement (Z) d'une manière sensiblement continue à travers la pluralité de couches (2, 3, 4, 5) de fibres de carbone.

4. Matériau façonné (1, 11) selon la revendication 3, dans lequel chaque couche (ou spire) présente une inclinaison comprise dans la plage de 1° à 10°, de préférence de 1° à 5°, par exemple environ égale à 1°, par rapport à un axe perpendiculaire à l'axe de chevauchement (Z).

5. Matériau façonné (1, 11) selon l'une quelconque des revendications précédentes, dans lequel le nombre de couches (2, 3, 4, 5) est compris dans la plage de 18 à 40, de préférence entre 20 et 35, ou entre 24 et 30, ou entre 21 et 26.

6. Matériau façonné (1, 11) selon l'une quelconque des revendications précédentes, dans lequel la direction incidente (I) est sensiblement perpendiculaire à la direction radiale (R).

7. Matériau façonné (1, 11) selon l'une quelconque des revendications précédentes, dans lequel les segments (6, 7) se présentent sous la forme d'un secteur circulaire ou d'un arc de couronne circulaire présentant une largeur circonférentielle comprise dans la plage de 60 à 90°, par exemple égale à environ 68°.

8. Matériau façonné (1, 11) selon l'une quelconque des revendications précédentes, dans lequel chaque segment (6, 7) comprend principalement ou exclusivement des fibres de carbone unidirectionnelles, agencées dans la direction radiale (R) ou dans la direction incidente (I).

9. Matériau façonné (1, 11) selon l'une quelconque des revendications précédentes, dans lequel au moins une partie des fibres de carbone, de préférence toutes les fibres de carbone, sont dérivées de fibres de polyacrylonitrile oxydé, par exemple de fibres Panox^{®}.

10. Matériau façonné (1, 11) selon l'une quelconque des revendications précédentes, dans lequel l'axe de chevauchement (Z) est orienté parallèlement à un axe de rotation du matériau façonné (1, 11).

11. Matériau façonné (1, 11) selon l'une quelconque des revendications précédentes, comprenant du carbure de silicium (SiC) obtenu par réaction d'une partie du carbone (C) desdites fibres de carbone et/ou d'une matrice carbonée dudit matériau façonné (1, 11) avec au moins une partie de silicium (Si) infiltrée dans ledit matériau façonné (1, 11), le carbure de silicium (SiC) étant de préférence agencé pour ponter des couches adjacentes de fibres de carbone.

12. Matériau façonné (1, 11) selon l'une quelconque des revendications précédentes, dans lequel ledit matériau façonné (1, 11) présente une porosité résiduelle inférieure à 5 %, par exemple inférieure ou égale à 3 %.

13. Matériau façonné (1, 11) selon l'une quelconque des revendications précédentes, le matériau façonné étant un disque pour freins à disque, par exemple un disque ventilé.

14. Matériau façonné (1, 11) selon la revendication 13, dans lequel ledit disque pour freins à disque est ventilé et comprend une bande de freinage comprenant deux plaques (12, 13) dont les surfaces extérieures (14, 16) définissent des surfaces de freinage opposées destinées à coopérer avec le patin d'un frein à disque, dans lequel chacune desdites plaques (12, 13) présente une épaisseur (y) définie comme la somme de « l'épaisseur minimale » (K) et de « l'épaisseur qui peut être usée » (y-K), ladite « épaisseur minimale » (K) étant égale à l'épaisseur de trois couches (2, 3, 4) et ladite « épaisseur qui peut être usée » (y-K) étant variable.

15. Procédé de fabrication du matériau façonné (1, 11) selon l'une quelconque des revendications précédentes, comprenant les étapes suivantes :
a) l'empilement d'une pluralité de couches (2, 3, 4, 5) de fibres de carbone, ou de précurseurs desdites fibres de carbone, le long d'un axe de chevauchement (Z) pour former un corps multicouche, chacune desdites couches (2, 3, 4, 5) étant formée par une pluralité de segments radiaux (6) et de segments transversaux (7), où chaque segment radial (6) est adjacent et relié, sur les deux côtés, à un segment transversal (7), et chaque segment transversal (7) est adjacent et relié, sur les deux côtés, à un segment radial (6), formant dans chaque couche (2, 3, 4, 5) une alternance de segments radiaux (6) et de segments transversaux (7) ;
b) la soumission du corps multicouche obtenu à l'étape a) à un traitement de densification thermique ou thermochimique, de manière à obtenir ledit matériau façonné (1, 11) ;
c) en option, l'infiltration du matériau façonné (1, 11) obtenu à l'étape b) avec un agent d'infiltration, par exemple du silicium (Si) ou du carbure de silicium (SiC).

16. Procédé selon la revendication 15, dans lequel ladite étape a) comprend une étape d'agencement des segments radiaux (6) et des segments transversaux (7) en spirale autour de l'axe de chevauchement (Z) d'une manière sensiblement continue à travers la pluralité de couches (2, 3, 4, 5) de fibres de carbone.

17. Procédé selon la revendication 15 ou 16, dans lequel ledit agent d'infiltration comprend du silicium (Si) et, pendant ladite étape c), une partie du silicium (Si) infiltré réagit avec une partie du carbone (C) des fibres de carbone et/ou d'une matrice carbonée dudit matériau façonné (1, 11) pour former du carbure de silicium (SiC).
